Europäisches Patentamt

European Patent Office

Office européen des brevets

(19)

(11) Publication number: **0 285 384**
**A2**

# EUROPEAN PATENT APPLICATION

(12)

(21) Application number: **88302812.8**

(22) Date of filing: **30.03.88**

(51) Int. Cl.⁴: **G 11 B 23/087**

(30) Priority: **30.03.87 US 31658   24.03.88 CA 562411**

(43) Date of publication of application:
**05.10.88 Bulletin 88/40**

(84) Designated Contracting States:
**AT BE CH DE ES FR GB GR IT LI LU NL SE**

(71) Applicant: **Williamson, Kevin M.**
**13469 - 68th Avenue**
**Surrey British Columbia, V3W 2G1 (CA)**

**Williamson, Kyle L.**
**13112 - 61st Avenue**
**Surrey British Columbia, V3W 8C2 (CA)**

(72) Inventor: **Williamson, Kevin M.**
**13469 - 68th Avenue**
**Surrey British Columbia, V3W 2G1 (CA)**

**Williamson, Kyle L.**
**13112 - 61st Avenue**
**Surrey British Columbia, V3W 8C2 (CA)**

(74) Representative: **Coxon, Philip et al**
**Eric Potter & Clarkson 14 Oxford Street**
**Nottingham NG1 5BP (GB)**

(54) **Disposable non-rewinding tape cassette.**

(57) A cassette for a tape comprising a cassette body, a takeup reel and a supply reel. Each of the reels is journalled for rotation about respective axes in the cassette body. Means for preventing the tape from being unwound from the takeup reel is provided. Means may also provided for erasing the tape following the viewing of the tape.

FIG. 1

**Description**

DISPOSABLE NON-REWINDING TAPE CASSETTE

This invention relates to a cassette for a tape and, more particularly, to a cassette in which the tape can be played one time only and is disposable.

Several devices have been utilized to prevent the winding of tape in a cassette. For example, U.S. Patent 4,512,535 to Dickson et al. discloses a tape cassette with a clutch assembly, the clutch assembly being connected to one of the reels to allow rotation of the particular reel in one direction only. A disadvantage with such an apparatus, however, is that the clutch assembly there disclosed includes a number of different components which is disadvantageous because of cost and reliability. A further disadvantage is that the cassette is designed to allow rewinding.

U.S. Patent 4 482 104 to Saito relates to a tape cassette which prevents the supply reel from rewinding the tape. The cassette includes a reel lock mechanism disposed at an intermediate position between the supply reel and the takeup reel, the reel lock mechanism including a pivotal lock member which engages with the teeth around the periphery of a flange of the supply reel in the manner of a ratchet mechanism. Such a device is disadvantageous, however, because it may be rewound with the use of a key and the device is complicated.

U.S. Patent 1,933,562 to Michel discloses a film magazine which includes a spring adapted to engage with the teeth of a gear connected to one of the reels to act as a ratchet which allows rotation of the reel in one direction only to prevent double exposure of the film. Such a device is impractical, however, in a video cassette because it creates noise.

Tape cassettes have been designed for use with video cassette recorders in order to record television programs, movies and the like. These tape cassettes utilize "blank" tapes which are adapted to be played and rewound a number of times.

Video tape cassettes are also rented and are reusable. From the point of view of the videotape copyright owner and the tape lessor, it is desirable for the cassette to be disposable after one viewing of the tape contents. The user of such a rental video cassette finds it attractive to avoid the necessity of returning the cassette in addition to having a high quality tape to view. The cassette is also attractive to the copyright owner who can more practically obtain a royalty for each viewing of the copyrighted material.

According to the invention, there is disclosed a cassette comprising a cassette body, a takeup reel, a supply reel, each of said reels being journalled for rotation relative to said cassette body about a respective center, a tape operable to move from said supply reel to said takeup reel and means for preventing said tape from being rewound on the said supply reel.

According to a further aspect of the invention, there is disclosed a cassette comprising a cassette body, a takeup reel and a supply reel journalled for rotation about respective axes, each of said reels having a respective flange and a member cooperating with one of said flanges and being operable to prevent said supply reel from rewinding said tape.

According to yet a further aspect of the invention, there is disclosed a cassette comprising a tape, a cassette body, a takeup reel and a supply reel, journalled for rotation each about a respective axis, and tape erasing means contacting said tape.

According to yet a further aspect of the invention, there is disclosed a cassette having a cassette body, said cassette body having a face portion, a tape connected between a supply reel and a takeup reel and passing over said face portion, said body having a recess for each of said supply and takeup reels and at least one adhesive pad mounted on said face portion between said body and said tape.

According to yet a further aspect of the invention, there is diclosed a cassette comprising a cassette housing, a cassette body, first and second recesses in said body for a takeup and a supply reel, respectively, at least one flex member mounted on one of said housing or reel, a stop member mounted on the other of said housing or reel, said flex and stop members cooperating to allow rotation of said reel in a first direction and to prevent rotation of said reel in the opposite direction.

According to yet a further aspect of the invention, there is disclosed a cassette comprising a body, first and second recesses in said body for a takeup reel and a supply reel, respectively, flexible and angularly mounted fin members extending from the hub of at least one of said reels, said fin members being operable to allow rotation of said one reel in a first direction and to prohibit rotation of said one reel in a direction opposite to said first direction.

According to yet a further aspect of the invention, there is disclosed a cassette for a tape comprising a cassette body, a takeup reel and a supply reel, each of said reels being journalled for rotation relative to said cassette body about respective axes, a tape operable to move from said supply reel to said takeup reel and a first means for preventing said tape from being rewound onto said supply reel.

Specific embodiments of the invention will now be described, by way of example only, with the use of drawings in which:

Figure 1 is a diagrammatic isometric view showing the cover of the cassette in an open position;

Figure 2 is a diagrammatic isometric view showing the cassette cover in its closed position and partially cutaway;

Figure 3 is a diagrammatic isometric exploded view of the cassette of Figure 1;

Figure 4 is a diagrammatic sectional view of the cassette of Figure 1 taken along the line IV-IV;

Figure 5 is a diagrammatic partial sectional view similar to Figure 4 but with the cover in the closed position and further illustrating the supply reel and the breakaway tabs on the supply reel;

Figure 6 is a partial bottom view of the supply reel particularly illustrating the breakaway tabs;

Figure 7 is a plan view of a breakaway tab illustrated in its unfolded orientation according to the invention;

Figure 8 is a diagrammatic bottom view of the cassette of Figure 1 with the lower face of the cassette removed;

Figure 9 is an enlarged diagrammatic view illustrating the area IX of Figure 8;

Figure 10 is an enlarged diagrammatic view of the area X of Figure. 8;

Figure 11 is an isometric view of a sleeve used to reduce tape friction according to the invention;

Figure 12 is a diagrammatic isometric view illustrating a tape engaging member on the flange of the takeup reel according to the invention;

Figures 13A-13B are diagrammatic isometric views of the supply reel illustrating the tape engaging member on the rewind operation;

Figure 14 is an enlarged isometric view of the tape engaging member of Figures 12, 13A and 13B;

Figure 15 is a diagrammatic isometric partial rear view of the cassette according to a further aspect of the invention;

Figure 16 is a partial diagrammatic sectional view of the cassette taken along XVI-XVI of Figure 15;

Figure 17 is a diagrammatic isometric partial view of the takeup reel of Figure 15 according to a further aspect of the invention;

Figure 18 is a diagrammatic isometric view of the takeup reel illustrating a further aspect of the invention;

Figures 19A-19F are diagrammatic plan views of the cassette illustrating the flexible drive members according to a further aspect of the invention;

Figure 20 is a diagrammatic plan view illustrating the flexible fin members in random position after inserting the the cassette in a recording and playing machine and the location of the stop member above the takeup reel;

Figures 21A-21B are partial diagrammatic sectional views illustrating the operation of the flexible fin member after manufacture to ready the tape for sale;

Figures 22A-22C are partial diagrammatic sectional views of the flexible fin member during operation of the cassette; and

Figure 23 is a partial diagrammatic plan view of area XXIII of Figure 20 illustrating the removable shield used for the magnet during the manufacturing and recording process.

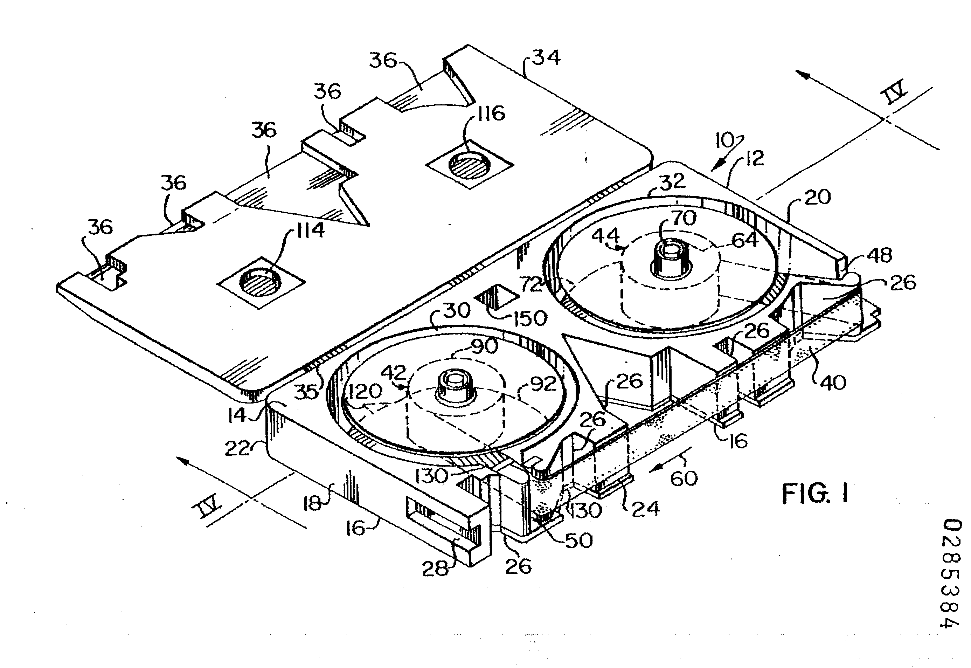

With reference now to the drawings, a cassette of substantially rectangular shape is generally illustrated at 10 in Figure 1. It comprises a body 12 which has an upper face 14, a lower face 16, two side faces 18, 20 and two end faces 22, 24. The end face 24 has a plurality of recesses 26 to allow the cassette 10 to be inserted into a video cassette recorder (not illustrated) and to be operated as is usual except as noted hereafter. The side face 18 has a recess 28 which is designed to engage with cooperating elements in the video cassette recorder.

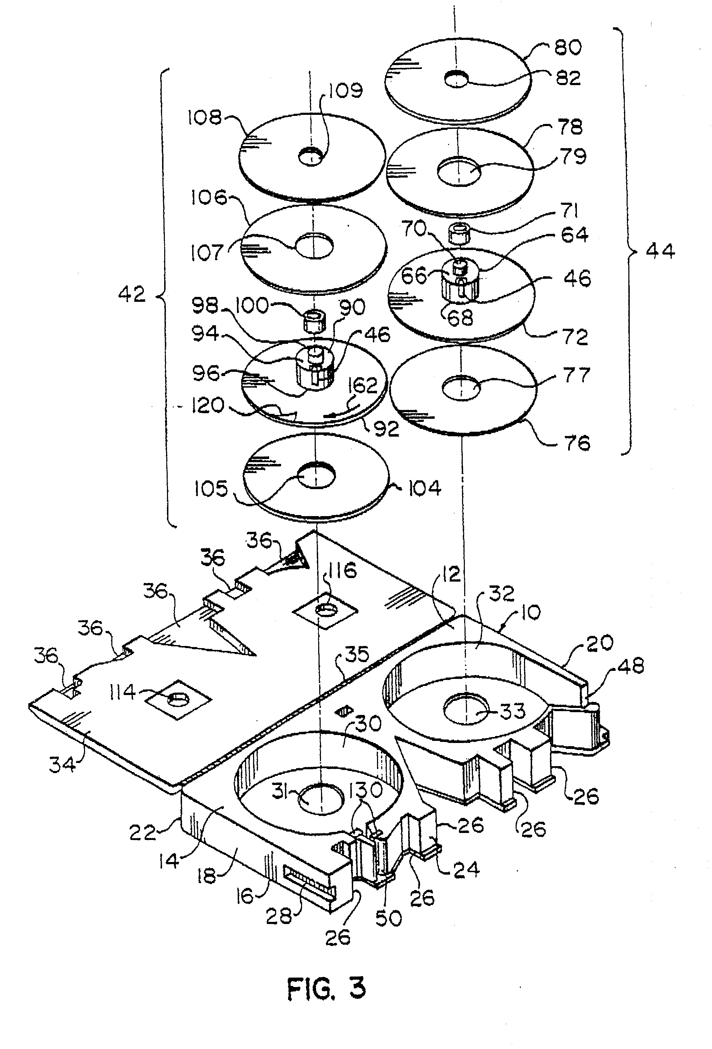

The body 12 has two circular recesses 30, 32. The recesses 30, 32 have central circular appertures 31, 33 (Figure 3). The recesses 30, 32 communicate with a tape inlet 50 and a tape outlet 48, respectively. The cassette 10 further includes a cover 34 hingedly connected to the body 12 by hinge 35.

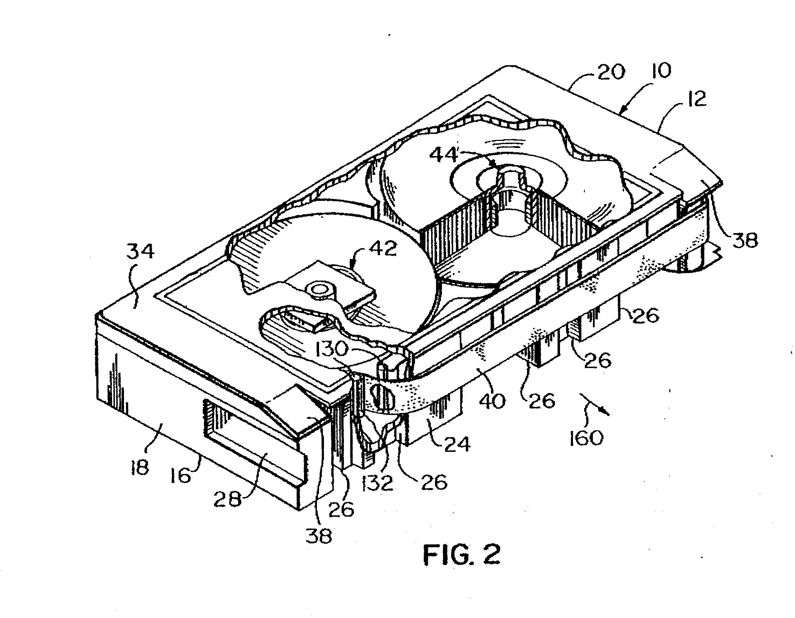

The cover 34 also has a plurality of recesses 36 adapted to align with the recesses 26 in the body 12 when the cover 34 is in the closed position covering the cassette 10 as illustrated in Figure 2.

The body 12 is constructed of an essentially rigid polymer, namely an expanded polystyrene. The upper and lower faces 14, 16 and the cover 34 are also constructed of cardboard or thin sheet rigid plastic.

The cover 34 has two inclined surfaces 38 adjacent to side faces 18, 20 (Figure 2). The inclined surfaces 38 function as ramps to aid in inserting the cassette 10 into a recorder.

The cassette 10 further includes a tape 40, a takeup reel generally illustrated at 42, and a supply reel generally illustrated at 44. The takeup reel 42 is rotatably mounted in circular recess 30 and the supply reel 44 is rotatably mounted in circular recess 32. The tape 40 has two ends, each end being connected to either the takeup or supply reels 42, 44, respectively, with paper clips 46 (Figure 3). A substantial portion of the tape 40 is wound on the supply reel prior to viewing as will be explained in more detail hereafter. The tape 40 has a magnetized side and an unmagnetized side and, in operation, it exits the circular recess 32 through tape outlet 48 (Figure 3) and is then pulled away from the end face 24 by the various mechanisms of the recorder and into contact with the recording head. The tape then leaves the recording head and winds back into the recess 30 through tape inlet 50, arrow 60 (Figure 1) indicating the direction of tape movement as the tape 40 is being played.

Supply reel 44 comprises a hollow cylindrical hub 64 which has a closed top end 66 and an open bottom end 68. A cylindrical hub member 70 is mounted centrally on the closed top end 66. An annular hub bearing 71 is rotatably mounted on the cylindrical hub member 70. The cylindrical hub 64 is connected to a first annular flange 72.

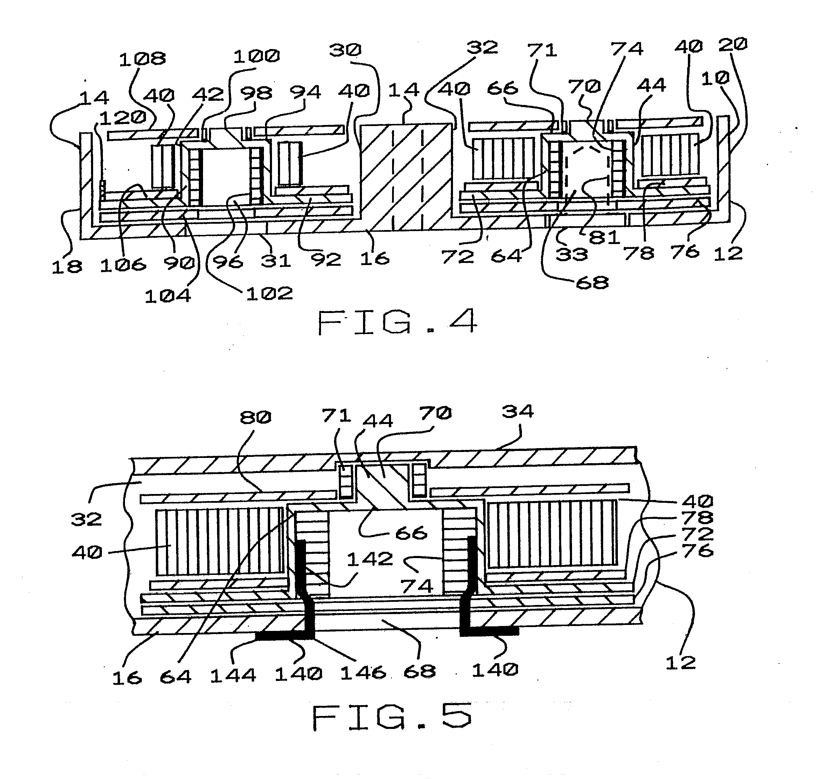

As best seen in Figure 4, a deformable core 74 is mounted inside the cylindrical hub 64. The deformable core 74 is an expanded flexible plastic annulus which is a snug fit in the cylindrical hub 64. The deformable core 74 is adapted to be engaged by the drive spindle 81 of the conventional video cassette recorder and which is shown in phantom in Figure 4.

A second annular flange 76 (Figure 3) has a central aperture 77. Second annular flange 76 is mounted between the first annular flange 72 and the lower face 16 of cassette body 12. A third annular flange 78 has a central aperture 79 which is slightly larger in diameter than the cylindrical hub 64. The third annular flange 78 is rotatably mounted on the first annular flange 72. A fourth annular flange 80 has a central aperture 82 which is slightly smaller in diameter than the cylindrical hub 64. The fourth flange 80 is rotatably mounted on the cylindrical hub 64.

The take-up reel 42 is similar in structure to the supply reel 44 and likewise has a hollow cylindrical hub 90 which is connected to a first annular flange 92. The cylindrical hub 90 has a closed top end 94 and an open bottom end 96. A cylindrical hub member 98 is mounted centrally on the closed top end 94. An annular hub bearing 100 is rotatably mounted on the cylindrical hub member 98. The cylindrical hub 90 has a deformable core 102 (Figure 4) similar to the deformable core 74. A second annular flange 104 has a central aperture 105 and is disposed between the lower face 16 and the annular flange 92. A third annular flange 106 has a central aperture 107 which is slightly larger in diameter than the cylindrical hub 90 and which is rotatably mounted on the first flange 92. Fourth annular flange 108 has a central aperture 109 which is slightly smaller in diameter than the cylindrical hub 90. The fourth annular flange 108 is rotatably mounted on the cylindrical hub 90.

Third and fourth flanges 78, 80, respectively, of the supply reel 44 act as lower and upper guides for the tape 40 of the supply reel 44. Third and fourth flanges 106, 108, respectively, of the takeup reel 42, act as upper and lower guides for the tape 40 onto the takeup reel 42.

Second annular flange 76 acts as a washer to reduce friction between first annular flange 72 and the lower face 16 of the cassette 10. Third annular flange 78 acts as a washer to reduce friction between the tape 40 and first flange 72. Fourth annular flange 80 acts as a washer to reduce friction between the tape 40 and the cover 34 of the cassette 10.

The same is likewise true of the takeup reel 42. Second flange 104 acts as a washer to reduce friction between first flange 92 and the lower face 16 of the cassette 10. Third flange 106 acts as a washer to reduce friction between the tape 40 and first flange 92. Fourth flange 108 acts as a washer to reduce friction between tape 40 and cover 34.

Cover 34 has two circular recesses 114, 116. The recesses 114, 116 act as female receptacles or the annular hub bearings 71, 100, respectively.

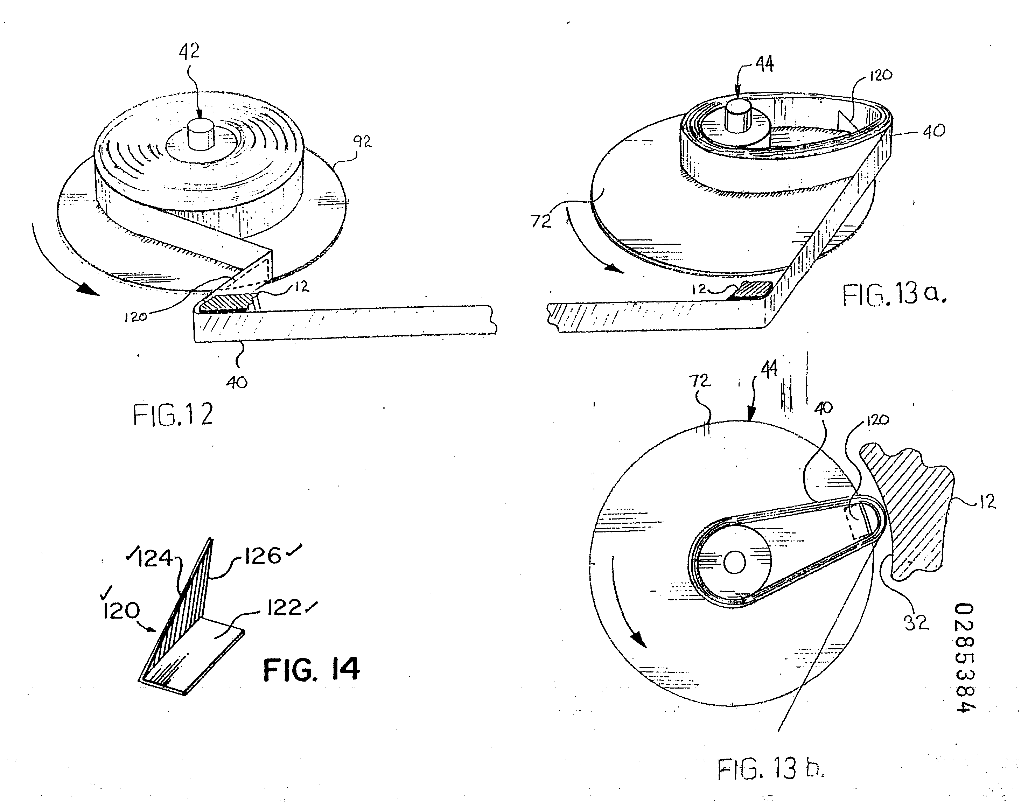

Referring to Figures 3 and 4, a tape contact member 120 is mounted on first annular flange 92 of the takeup reel 42. As seen in Figure 14, tape contact member 120 is triangular and has a base 122, a sliding side 124 and a contact side 126. The sliding side 124 extends at an angle from the base 122 and contact side 126 extends vertically from the base 122.

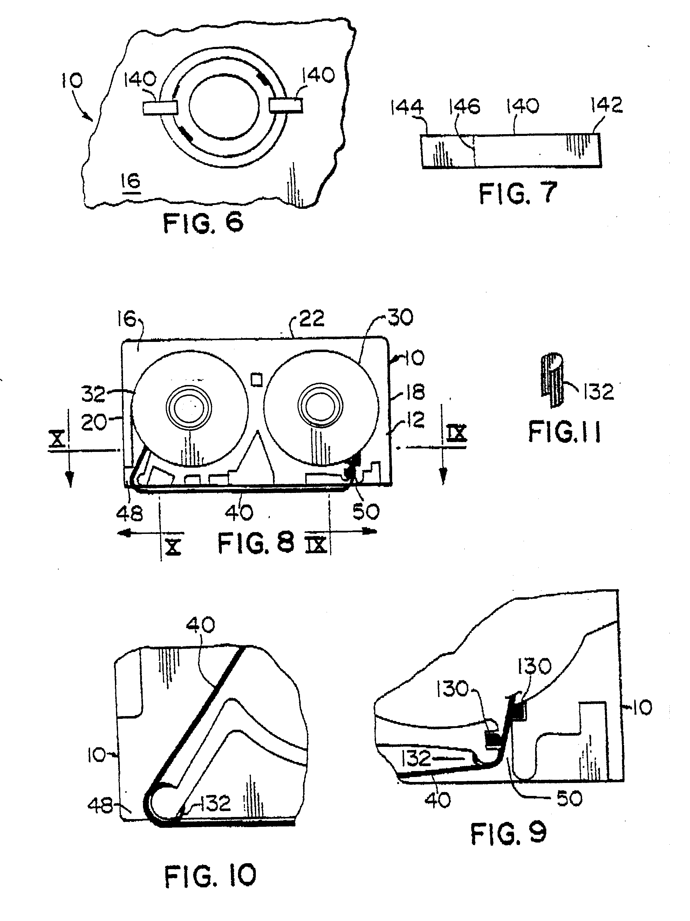

Breakaway tabs 140 illustrated in Figures 5, 6 and 7 have a first end 142 and a second end 144. Each tab 140 has perforations 146 adjacent the second end 144. The first end 144 is connected to the lower face 16 by suitable adhesive means. The second end 142 is disposed between the deformable core 74 and the cylindrical hub 64.

A square-shaped aperture 150 extends through the body 12 from the upper face 14 to the lower face 16 as seen in Figure 1. The aperture 150 is disposed between the two recesses 30, 32.

In operation, the tape 40 will be wound in supply reel 44 during the manufacturing process with one end of the tape 40 being connected to the takeup reel 42. Following the winding of the prerecorded tape onto the supply reel 44, the breakaway tabs 140 are connected between the supply reel 44 and the bottom face 16 of the cassette body 12 to prevent the supply reel 44 from rotating. This prevents the tape 40 from unravelling from the cassette 10 prior to use.

The cassette 10 is inserted into a conventional video cassette recorder in the direction of arrow 160 of Figure 2. In this manner, the cover 34 faces upward and the end face 24 is fed into the recorder. The inclined surfaces 38 assist in allowing the cassette 10 to be inserted into the video cassette recorder. Some video cassette recorders have downwardly extending members and the inclined surfaces 38 ensure that the downwardly extending members do not unduly inhibit the insertion of the cassette 10.

When the user activates the PLAY button on the recorder, a drive spindle in the recorder commences to rotate clockwise. The recorder mechanism will pull tape 40 away from the face 24 and onto the recording head of the recorder. The tape 40 then moves into the tape inlet area of the cassette 10. The action of the drive spindle on the takeup reel 42 creates movement of the tape 40 from the supply reel 44 to the takeup reel 42. This movement of the tape 40 causes the breakaway tabs 140 on the supply reel 44 to break along the perforations 146.

If the user of the cassette 10 activates the STOP button on the recorder after watching a portion of the tape 40, the tape 40 will stop and can be restarted by again activating the PLAY button. If, however, the user attempts to rewind the tape 40 by activating the REWIND button on the video cassette recorder, the rotating drive spindle on the supply reel 44 reverses direction. The deformable core in the supply reel 44, being soft and having a relatively small amount of drive force existing between it and the drive spindle 81, cannot transmit adequate rewind torque to rewind the tape 40 from the takeup reel 42 to the supply reel 44 beyond that amount of torque required to pull the tape "flush" against the end face 24.

In addition to the deformable core 74, tape contact member 120 operates as a second or alternate means for preventing the tape 40 from being unwound from the takeup reel 42. The member 120 is mounted so that the sliding side 124 (Figure 14) faces in the direction of rotation of the respective flange when the tape 40 is being operated in the PLAY mode as indicated by arrow 162 in Figure 3. As the tape 40 is played, the tape will slide over the sliding side 124 of the member 120 without impediment. The tape contact member 120 may be mounted on the annular flange 92 of the takeup reel 42 as shown in Figure 12 or, similarly, mounted on flange 72 of the supply reel as shown in Figures 13A and 13B, or alternatively, on both of the flanges 92, 72.

If there is a member 120 on the supply reel 44 only and the cassette 10 is equipped with a conventional type hub and the user activates the REWIND button or attempts to manually rewind the tape 40, the member 120 will interfere with the tape 40 as indicated in Figure 13B and rewind it to an extent that it interferes with the walls of the circular recess 32 in which the supply reel 44 rotates. This interference will stop any further rewinding of the tape onto the supply reel 44 and the recorder will turn itself off in response to the large increase in torque as is usual.

On the other hand, if the member 120 is mounted on the annular flange 92 of the takeup reel 42 as is illustrated in Figure 12, the rewinding operation will result in the member 120 interferring with the tape 40 as is also illustrated in Figure 12.

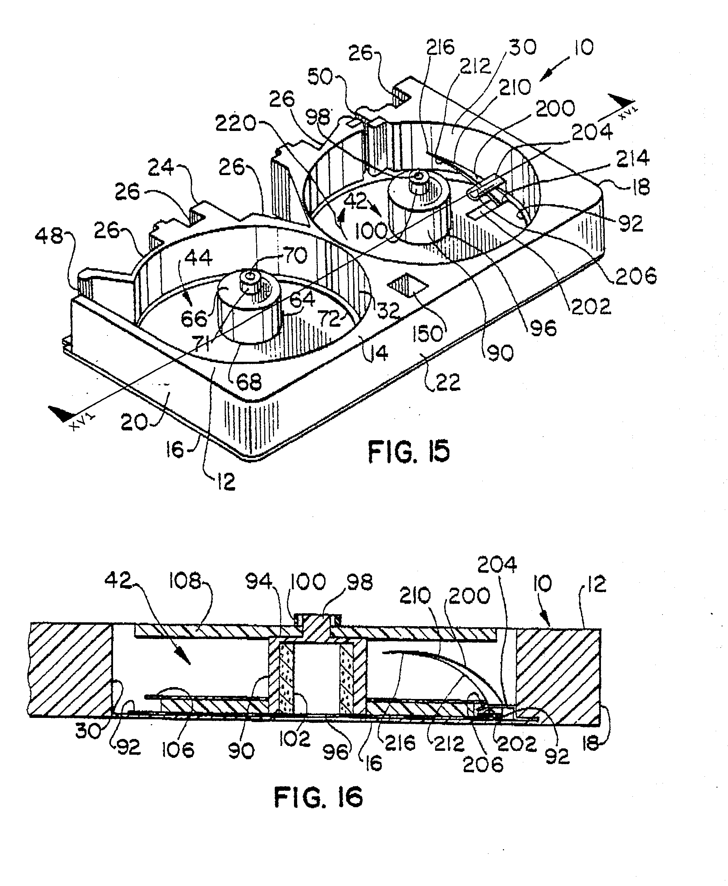

In an alternative embodiment illustrated in Figures 15, 16, 17 and 18, an angular upwardly sloping member known informally as a "shark fin" 200 is provided which is connected to a base 202. The base 202 is, in turn, mounted on the annular flange of the takeup reel 42. An Z-shaped anchor member or clip 204 is connected to the body 12, as clearly illustrated in Figure 16. The angular member 200 and the anchor clip 204 are constructed of a substantially rigid polymer, such as polystyrene. The anchor clip 204 is mounted to extend generally radially inwardly from the periphery of circular recess 30 and has a free arm 206 which extends inwardly past the outside circumference of annular flange 106.

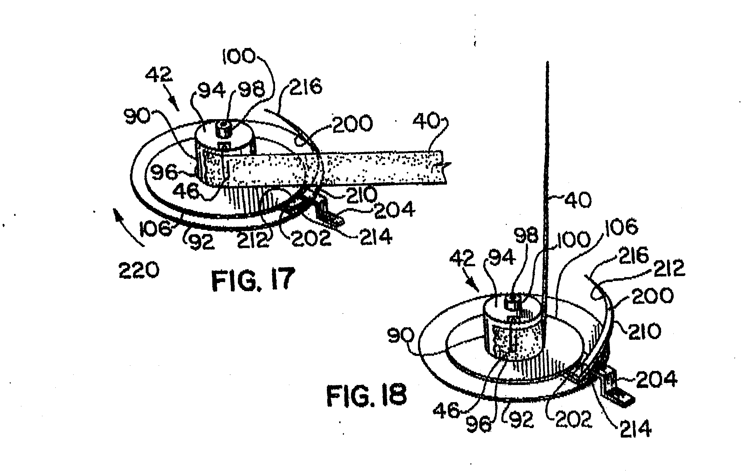

With reference to Figure 16, the angular member or shark fin 200 has outside edge 210, inside edge 212, a base end 214 (Figures 15 and 17) and a tail end 216. Preferably, the anchor clip 204 is connected to the body 12 and positioned so that it is spaced apart from the tape inlet 50 approximately 45 degrees in the direction of normal play of tape 40. Figure 15, however, illustrates the clip 204 spaced apart from the tape inlet 50 approximately 90 degrees for clarity. The angular member 200 is located on the annular flange 92 so that as the takeup reel 42 rotates in the direction of normal tape play as illustrated by arrows 220 in Figures 15 and 17, the base end 214 rotates forwardly of the tail end 216.

In operation and as the tape 40 is played, the takeup reel 42 rotates in the direction of arrow 220 (Figures 15 and 17). The angular upwardly sloping member 200 will be depressed by and pass under the anchor clip 204 once every revolution of the takeup reel 42 in the direction of normal play of the tape 40 since the base end 214 is adjacent to the base 202 and below the free end 206 of the anchor clip 204. Figure 17 illustrates the angular member 200 passing beneath the anchor clip 204 as the takeup reel 42 is rotating in the direction of arrow 220. The tape inlet 50 is situated in such a position that the tape 40 is guided between the inlet 50 and the reel 42 and passes over very near the anchor clip 204. This close relationship enables the tape to be wound onto the takeup reel 42 unobstructed by the angularly upwardly sloping member 200 because the member 200 is always fully depressed at the location where the tape 40 passes over except when the tape is substantially fully taken up by the takeup reel 42.

When the angular member 200 completely passes the anchor clip 204, it will spring back to its normal position with the tail end 216 being higher than the base end 214. This process will be repeated every revolution of the takeup reel 42 to allow the tape 40 to be played as is usual.

The anchor clip 204 serves two functions. The first function, as described, is to ensure that the tape 40 does not become tangled with the outside edge 210 of the angular member 200. The second function is to prevent the tape 40 from being rewound onto the supply reel 44.

If the user attempts to rewind the tape 40, either by operation of the REWIND button of the recorder or manually, the tail end 216 of the angular member 210 will pass over the top of the anchor clip 204 as illustrated in Figure 18. Thus the member 200 will have its base end 214 abutting and interfering with the anchor 204 to prevent further rotation. Due to the resistance, the recorder will cease rewinding the tape as is usual.

In yet a further embodiment of the invention, a pair of permanent magnets 130 as shown in Figures 3 and 9 are embedded in the body 12 of the cassette 10 adjacent to the tape inlet 50 as best seen in Figures 3, 9 and 23. In this embodiment, the tape 40 sits between the two magnets 130, each magnet being in contact as a low friction guide with an opposite side of the tape 40. A split cylindrical sleeve 132 illustrated in Figures 9 and 11 is connected to the body 12 adjacent to the tape outlet 48 and the tape inlet 50, as shown in Figures 9 and 10, respectively. Each sleeve 132 acts as a low friction guide to reduce the friction between the tape 40 and the body 12 under operation.

Once a portion of the tape 40 has been played, that portion passes between and contacts the magnets 130 and is erased prior to being wound on the take-up reel 42. The magnets ensure that the tape can be viewed only once and act as an additional device to the deformable cores and the angular member already described.

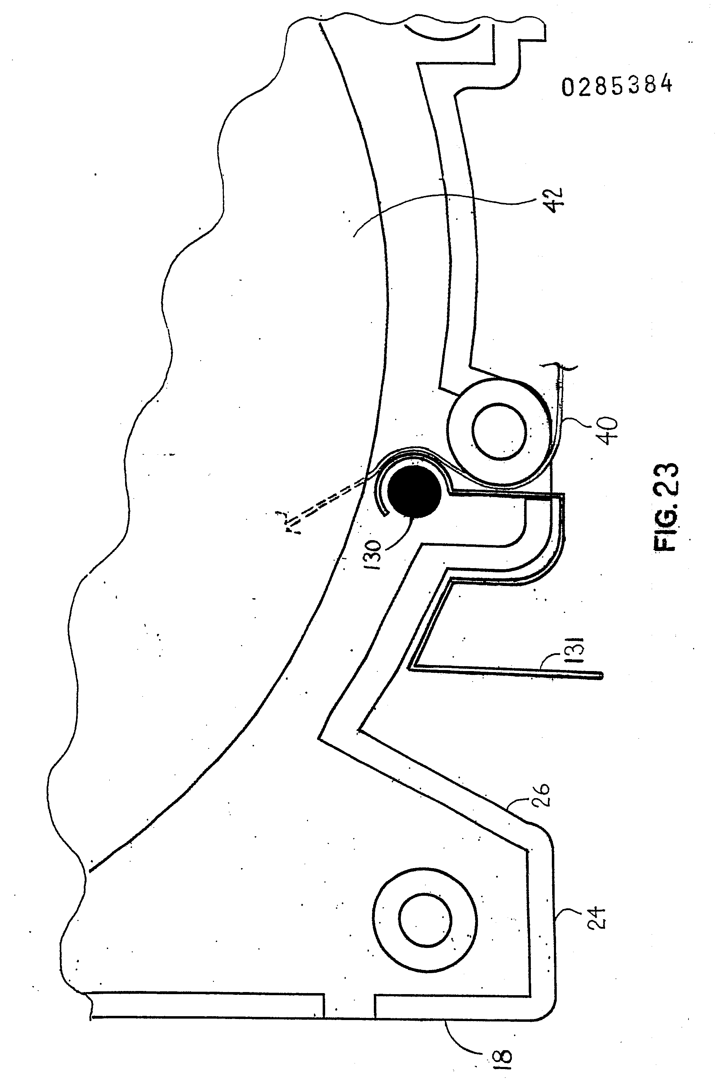

During the manufacturing process, however, it is necessary to allow the tape 40 to be rewound onto the supply reel 44. With reference to Figure 23, this is provided by inserting a plastic magnet protection clip 131 over the magnet 130. The clip 131 allows the tape 40 to be wound onto the takeup reel 42 and rewound onto the supply reel 44 without erasure of the tape during the manufacturing process and, thereafter, to be removed from the cassette 10 to allow viewing but to allow the image to be erased from the tape following the passage of the tape 40 over the recording head but before being wound onto the takeup reel 42. It will be noted that the shape of the head of the clip which covers the magnet will be such that while removal of the clip is facilitated, re-entry of the clip into the cassette following its removal is very difficult and, in practical terms, virtually impossible without damaging the tape or causing the reinserted pin to be ejected from the cassette during the rewind operation.

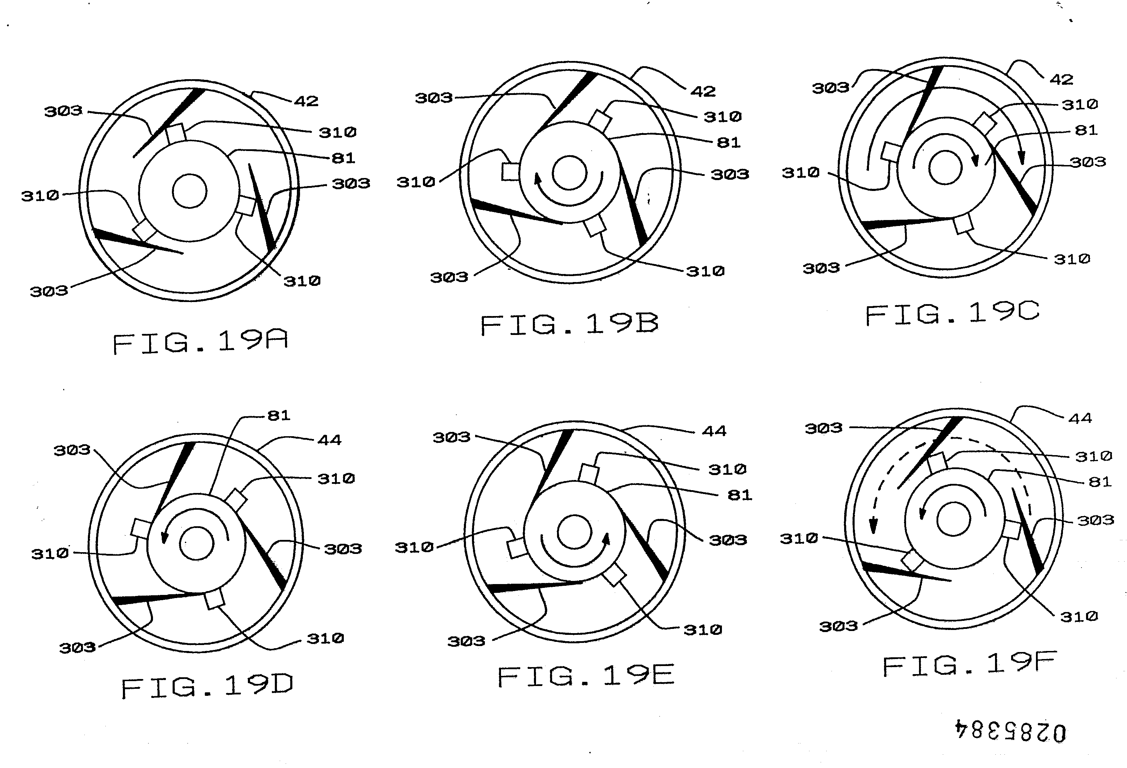

A further embodiment of the invention is illustrated in Figures 19A-19F. In this embodiment, the deformable cores 74, 102 (Figure 4) which are positioned in either or both of the cylindrical hubs 64, 90 of the takeup and supply reels 42, 44 are replaced with takeup and supply reels 42, 44, each reel having a series of flex fins 303 which are molded integrally with and flexibly extend from the inside periphery of each reel 42, 44. In addition, each driven spindle 81 of the recorder has a series of drive bars 310 as are illustrated in Figure 19 and as are inherent in current recorder design. Such a modification is considered desirable for cost reasons and the concomitant reduction in the number of separate parts making up the cassette 10.

In operation and when the cassette 10 is lowered by the recorder mechanism onto the drive spindle 81 (Figure 4), the position of the flex fins 303 is randomly located relative to the drive bars 310 of the driven spindle 81 of the takeup reel 42 as seen in Figure 19A. When the PLAY operation of the recorder commences, the drive spindle 81 will rotate in the direction of the driven spindle 81 in the direction illustrated in Figure 19B and the drive bars 310 integrally molded with and extending from the driven spindle 81 will contact the flex fins 303 as viewed in Figure 19C. Thereafter, the drive bars 310 of driven spindle 81 will drive the takeup reel 42 in order to take up the tape 40 supplied from the supply reel 44 as is usual.

When an attempt is made to rewind the tape 40 onto the supply reel 44, however, the driven spindle 81 on supply reel 44 will commence its reverse motion as illustrated in Figure 19D and the flex fins 303 will begin to slip relative to the spindle 81 and to remain stationary. As the spindle 81 continues its reverse motion, the flex fins 303 will simply allow the drive bars 310 of driven spindle 81 to pass after allowing the partial rotation required to pull the tape flush into the body of the cassette 10. The drive bars 310 continue to pass by the flex fins 303 as viewed in Figure 19F and, thus, any rewinding of the tape 40 will be impossible when the cassette 10 is operated by the recorder during the rewind operation. It should be noted that the action of the supply reel 44 and its driven spindle 81 in attempting to rewind the tape 40 will terminate automatically after time because of the lack of resistance on the supply side drive spindle 81 and the absence of movement of the takeup reel 42. This movement and/or lack of movement is generally automatically sensed most recorders and, thus, there is no adverse operating effects caused by this design.

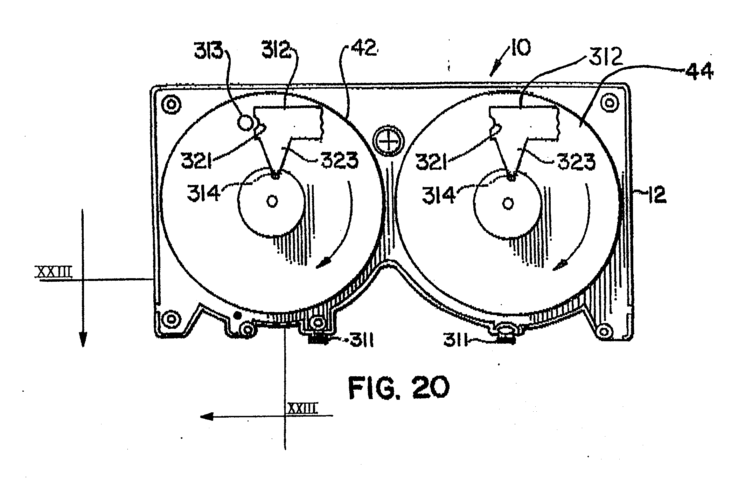

Yet a further embodiment of the invention is illustrated in Figure 20. In this embodiment, two adhesive pads 311 are attached to the body 12 of the cassette 10. The adhesive pads 311 are used to replace the breakaway tabs 140 previously described. The adhesive pads 311 simply are pressed on the body 12 of the cassette 10 where indicated, a contact type adhesive on the pads 311 being used for the connection to the surface of the body 12. On the side of the pad 311 opposed to the side contacting the body 12, a similar adhesive is provided. This adhesive is designed to allow tape contact and, subsequently, tape removal from the pad 311 upon insertion of the cassette 10 into the recorder when the play mechanism removes the tape 40 from the cassette 10 and winds it about the tape head of the recorder.

In operation, the adhesive pads 311 are installed following the manufacturing process when the tape 40 has been completely wound on the supply reel 44. After installation of the pads 311, the tape 40 is pressed into position on the front face of the cassette 10 thereby preventing the tape from accidentally unravelling from the tape outlet. The adhesive pads 311 also keep the tape 40 in the optimum position for the recorder mechanisms to operate correctly upon installation of the cassette 10 in the recorder.

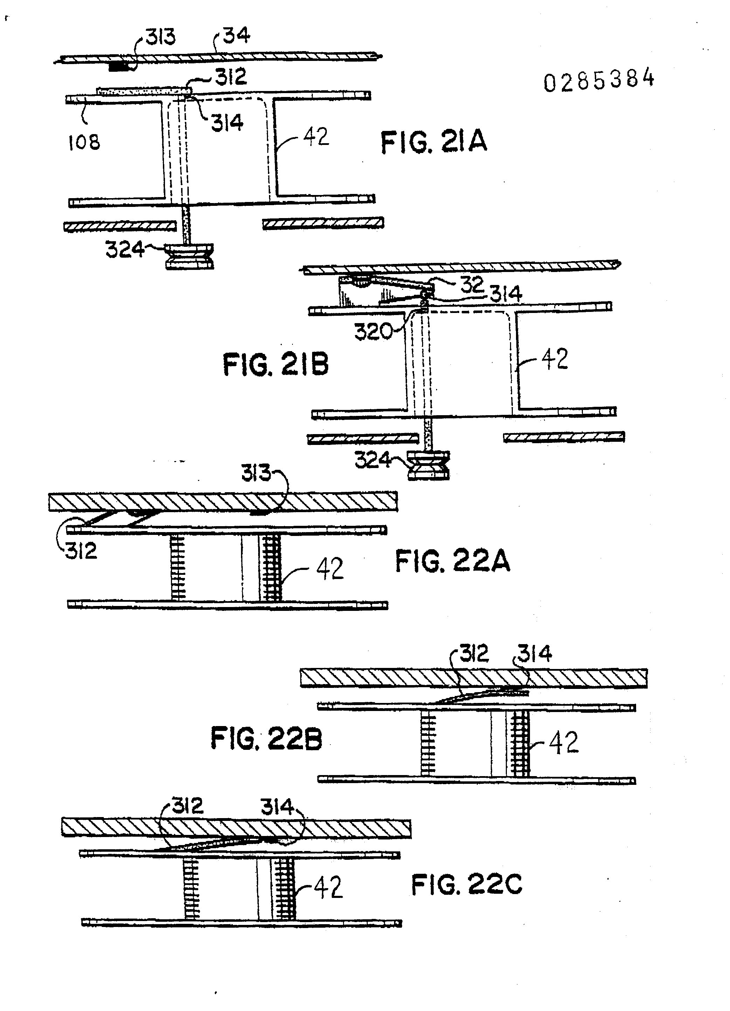

A further embodiment of the invention is illustrated in Figures 20, 21 and 22. In this embodiment, which is used for the manufacture of the cassette 10, the angularly upwardly sloping member 200 and the anchor member clip 204 previously described are replaced with a flexible fin member 312 connected to the tops of the fourth angular flanges 108, 80 and a cylindrical pin 313 molded into the cover 34 of the cassette 10 above the takeup reel 42, only. A partial recess 321 is provided in the flexible fin 312, the size and shape of the recess 321 corresponding with that of the pin 313. A second cylindrical pin 314 is connected to an arm 323 extending sidewise from the flexible fin member 312. It is operable to be fitted by way of a press fit into a corresponding recess 320 drilled into the annular flange 108 which is mounted so as to rotate with cylindrical hub 90. Recess 320 extends through the annular flange 108 as illustrated in Figure 21. Access to the pin 314 can be obtained with a tool 324 as illustrated in Figures 21A and 21B.

In operation, the tape 40 will be wound onto the supply reel 44 during the manufacturing operation. In this operation, the flexible fin 312 will be in the position illustrated in Figure 21A. That is, the cylindrical pin 314 will be pressed into the recess 320 and the fin will be flat against the fourth annular flange 108. In this position the supply reel 44 may be fully rewound because no interference occurs between the cylindrical pin 313 and the recess 321 of the flexible fin 312. Following the positioning of the tape on the supply reel 44, the manufacturer will insert the tool 324 into the recess 320 of the takeup reel 42 and push the pin 314 out of the recess 320. The release of the pin 314 will allow the flexible fin 312, since it is spring biased, to spring upwardly into the position illustrated in Figure 22 A. In this position, the takeup reel 42 may rotate cleanly in the direction indicated in Figure 20 and the flexible fin 312 acts as a shock absorbing tensioner between both reels 42, 44 and cover 34. It will be understood that for uniformity of components, the pin 314 and recess 320 may be included in both sides of the cassette 10.

When the fin 312 contacts the pin 313, the fin 312 will simply pass beneath the pin 313 as illustrated in Figure 22B. When, however, it is attempted to rewind the supply reel 44 in order to again show the videotape 40, the fin 312 of the takeup reel 42 will move in a direction opposite to that direction illustrated in Figure 20 and the recess 321 of the fin 312 will contact the pin 313 as illustrated in Figure 22C. This will stop the supply reel 44 from rewinding because the fin 312 on the takeup reel 42 stops the tape 40 from being unwound. It also has the effect of cutting off the tape supply to the supply reel 44. The recorder, sensing the resistance, will cease the supply of rewind power to the reel 44.

While various specific embodiments have been described, such embodiments are to be taken as illustrative of the invention only and not as limiting its scope. Many additional embodiments falling within the scope of the invention will readily occur to those skilled in the art to which the invention relates and, therefore, the scope of the invention should be construed in accordance with the accompanying claims.

## Claims

1. A cassette comprising a cassette body, a takeup reel, a supply reel, each of said reels being journalled for rotation relative to said cassette body about a respective center, a tape operable to move from said supply reel to said takeup reel and means for preventing said tape from being rewound onto said supply reel.

2. A cassette as in claim 1 wherein said means for preventing said tape from being rewound is a means inadequate to transmit proper rewind torque to said supply reel.

3. A cassette as in claim 2 wherein said means for preventing said tape from being rewound is a deformable core located at the centre of said supply reel.

4. A cassette as in claim 3 wherein said deformable core is an expanded flexible annulus engageable by a drive spindle of a video cassette recorder.

5. A cassette as in claim 4 wherein said expanded flexible annulus is mounted on said takeup reel, said annulus on said supply reel having a slightly larger inside diameter than the inside diameter of said annulus of said takeup reel.

6. A cassette as in claim 1 and further comprising removable lock means between said supply reel and said cassette body said lock means being operable to prevent said supply reel from rotating.

7. A cassette as in claim 6 wherein said lock means is a perforated tab connected between said cassette body and said supply reel.

8. A cassette comprising a cassette body, a takeup reel and a supply reel journalled for rotation about respective axes, each of said reels having a respective flange and a member cooperating with one of said flanges and being operable to prevent said supply reel from rewinding said tape.

9. A cassette as in claim 8 wherein said member is mounted on said one flange.

10. A cassette as in claim 9 wherein said member is angular.

11. A cassette as in claim 8 wherein said member is triangularly shaped and extends from said one flange of said takeup reel, said member being operable to contact said tape upon a rewinding operation and terminate movement of said takeup reel.

12. A cassette as in claim 8 wherein said member includes an angular upwardly sloping fin extending from said flange, said fin having a base end and a tail end, an anchor member mounted on said cassette body having a free end and a connected end, said anchor member being Z-shaped in cross section, said base end of said angularly upwardly sloping member being connected to a base, said base being mounted on said flange of said takeup reel, said angularly sloping fin being biased upwardly and to contact said anchor member upon rotation of said tape when said tape is being viewed.

13. A cassette as in claim 12 wherein said takeup reel is located adjacent a tape inlet, said anchor member being spaced from said tape inlet at an angle of approximately forty-five (45) degrees in the direction of normal play of said tape.

14. A cassette as in claim 8 and further including removable lock means operable to prevent said supply reel from rotating prior to viewing said tape.

15. A cassette as in claim 14 wherein said lock means includes a perforated tab connected between said cassette body and one of said reels.

16. A cassette comprising a tape, a cassette body, a takeup reel and a supply reel, journalled for rotation each about a respective axis, and tape erasing means contacting said tape.

17. A cassette as in claim 16 wherein said tape erasing means comprises a magnet.

18. A cassette as in claim 17 wherein said magnet contacts said tape prior to said tape being wound on said takeup reel.

19. A cassette as in claim 16 wherein said tape erasing means further includes a second magnet, each of said magnets contacting a respective side of said tape.

20. A cassette as in claim 16 and further including lock means between said supply reel and said cassette body.

21. A cassette as in claim 20 wherein said lock means is a perforated tab connected between said supply reel and said cassette body.

22. A cassette having a cassette body, said cassette body having a face portion, a tape connected between a supply reel and a takeup reel and passing over said face portion, said body having a recess for each of said supply and takeup reels and at least one adhesive pad mounted on said face portion between said body and said tape.

23. A cassette as in claim 22 wherein two adhesive pads are mounted on said face portion, one of said pads being located adjacent said supply reel and the other of said pads being located adjacent said takeup reel.

24. A cassette comprising a cassette housing, a cassette body, first and second recesses in said body for a takeup and a supply reel, respectively, at least one flex member mounted on one of said housing or reel, a stop member mounted on the other of said housing or reel, said flex and stop members cooperating to allow rotation of said reel in a first direction and to prevent rotation of said reel in the opposite direction.

25. A cassette as in claim 24 wherein said flex member further comprises a pin and a hole is positioned in one of said takeup or supply reels, said hole being operable to receive said pin in a press fit relationship and to hold flex member in a position substantially adjacent said reel.

26. A cassette as in claim 25 and further comprising an access passage to said hold, said access passage being accessible from a position external of said cassette.

27. A cassette as in claim 26 wherein said flex member is mounted on said reel and said stop member is mounted on said housing.

28. A cassette as in claim 27 wherein said flex member is mounted on said takeup reel.

29. A cassette comprising a body, first and second recesses in said body for a takeup reel and a supply reel, respectively, flexible and angularly mounted fin members extending from the hub of at least one of said reels, said fin members being operable to allow rotation of said one reel in a first direction and to prohibit rotation of said one reel in a direction opposite to said first direction.

30. A cassette as in claim 29 wherein said flexible and angularly mounted fin members are mounted on the hub of said takeup reel.

31. A cassette as in claim 30 wherein said flexible and angularly mounted fin members are also mounted on the hub of said supply reel.

32. A cassette comprising a body, a takeup reel, a supply reel mounted in said body, a tape connected between said takeup and supply reels and movable from said supply reel to said takeup reel and a magnet mounted adjacent said takeup reel and being operable to contact said tape.

33. A cassette as in claim 32 and further comprising a removable shield for said magnet.

34. A cassette as in claim 24 wherein said flex member is biased and operable to create a force between said housing and said reel.

35. A cassette as in claim 34 wherein one flex member is mounted between said takeup reel and said housing and a further flex member is mounted between said supply reel and said housing.

36. A cassette for a tape comprising a cassette body, a takeup reel and a supply reel, each of said reels being journalled for rotation relative to said cassette body about respective axes, a tape operable to move from said supply reel to said takeup reel and a first means for preventing said tape from being rewound onto said supply

reel.

FIG. I

0285384

FIG. 2

0285384

FIG. 3

FIG.4

FIG.5

0285384

FIG. 6

FIG. 7

FIG. 8

FIG. 11

FIG. 10

FIG. 9

0285384

FIG. 13 a.

FIG. 13 b.

FIG. 12

FIG. 14

0285384

FIG. 15

FIG. 16

FIG. 17

FIG. 18

FIG. 19A

FIG. 19B

FIG. 19C

FIG. 19D

FIG. 19E

FIG. 19F

0285384

FIG. 20

0285384

0285384

FIG. 21A

FIG. 21B

FIG. 22A

FIG. 22B

FIG. 22C

FIG. 23